# EUROPÄISCHE PATENTSCHRIFT

(11) **EP 4 079 141 B1**
(45) Veröffentlichungstag und Bekanntmachung des Hinweises auf die Patenterteilung: **14.06.2023**
(21) Anmeldenummer: 22168257.8
(22) Anmeldetag: 13.04.2022
(51) Int. Cl.: A01D 78/10, A01B 73/04

(54) **SCHWADER**
WINDROWER
ANDAINEUSE

(30) Priorität: 23.04.2021 DE 102021110514
(43) Veröffentlichungstag der Anmeldung: 26.10.2022
(73) Patentinhaber: CLAAS Saulgau GmbH, 88348 Bad Saulgau (DE)
(72) Erfinder: Schelkle, Roland, 88348 Bad Saulgau (DE); Beyrle, Michael, 88521 Ertingen (DE); Schupp, Raphael, 88099 Neukirch (DE); Wetzel, Andreas, 88370 Ebenweiler (DE); Wolf, Gerd, 72511 Bingen (DE)

(56) Entgegenhaltungen:
- EP-A1- 3 254 546
- EP-A1- 3 566 557
- DE-U1-202009 003 439

## Beschreibung

Die Erfindung betrifft einen Schwader nach dem Oberbegriff des Anspruchs 1. Ein derartiger Schwader ist z.B. aus dem Dokument EP 3 566 557 A bekannt.

Aus der Praxis bekannte Schwader verfügen über ein Grundgestell, wobei der Schwader über eine Zugdeichsel des Grundgestells an ein Zugfahrzeug ankoppelbar ist. Das Grundgestell eines Schwaders verfügt weiterhin über Räder, über die sich der Schwader auf einem zu bearbeitenden Untergrund abstützt. An dem Grundgestell des Schwaders sind Auslegerarme schwenkbar gelagert. Jeder Auslegerarm trägt einen Schwadkreisel. Um einen jeweiligen Auslegerarm zwischen einer Arbeitsstellung, einer Vorgewendestellung und einer Transportstellung verlagern zu können, ist jedem Auslegerarm ein hydraulischer Betätigungszylinder zugeordnet, der in ein Hydrauliksystem des Schwaders eingebunden ist. Derartige Betätigungszylinder sind typischerweise als einfachwirkende, hydraulische Betätigungszylinder ausgeführt.

Ein Schwader kann weiterhin ein Schwadtuch aufweisen. Ein solches Schwadtuch ist an einer Tragstruktur befestigt, wobei der Tragstruktur ein Betätigungszylinder zugeordnet sein kann, um über die Tragstruktur das Schwadtuch zu verschwenken bzw. zu klappen. Auch der Betätigungszylinder für die Tragstruktur des Schwadtuchs ist Bestandteil des Hydrauliksystems des Schwaders.

Das Hydrauliksystem eines Schwaders verfügt über viele Baugruppen, die fluidseitig miteinander zu verbinden sind. Zu diesen Baugruppen zählen nicht nur die Betätigungszylinder, sondern auch Ventile zur Ansteuerung der Betätigungszylinder. Je mehr Baugruppen ein Hydrauliksystem umfasst, desto komplizierter ist die fluidtechnische Verbindung der einzelnen Baugruppen. Dies kann zu einem sehr komplexen Aufbau des Schwaders führen.

Es besteht Bedarf an einem Schwader mit einem einfacheren Aufbau, insbesondere hinsichtlich der Baugruppen des Hydrauliksystems des Schwaders.

Hiervon ausgehend liegt der vorliegenden Erfindung die Aufgabe zugrunde, einen neuartigen Schwader zu schaffen.

Diese Aufgabe wird durch einen Schwader nach Anspruch 1 gelöst.

Erfindungsgemäß weist das Hydrauliksystem des Schwaders einen für die Betätigungszylinder aller Auslegerarme gemeinsamen Hydrauliksteuerblock auf. Der Hydrauliksteuerblock weist für den Betätigungszylinder jedes Auslegerarms ein individuelles, schaltbares Aushubventil und ein für die Betätigungszylinder aller Auslegerarme gemeinsames Druckbegrenzungsventil auf. Ferner weist der Hydrauliksteuerblock mehrere Hydraulikanschlüsse auf, nämlich einen ersten Hydraulikanschluss, der für den Anschluss an ein Hydrauliksystem eines Zugfahrzeugs ausgebildet ist, mehrere zweite Hydraulikanschlüsse, die für den Anschluss der Betätigungszylinder der Auslegerarme ausgebildet sind, mindestens einen dritten Hydraulikanschluss, der für den Anschluss eines Druckspeichers ausgebildet ist, und einen vierten Hydraulikanschluss, der für den Anschluss eines Betätigungszylinders einer Tragstruktur eines Schwadtuchs ausgebildet ist.

Mit der Erfindung wird ein Schwader vorgeschlagen, dessen Hydrauliksystem einen Hydrauliksteuerblock aufweist, in dem möglichst viele Baugruppen des Hydrauliksystems des Schwaders vereint bzw. zusammengefasst sind. Hierdurch kann der Aufbau des Hydrauliksystems des Schwaders und damit des Schwaders vereinfacht werden.

Der Hydrauliksteuerblock ist als funktionale Einheit ausgebildet, wobei seine Baugruppen intern fluidverbunden sind, und wobei derselbe über seine Hydraulikanschlüsse an weitere Baugruppen des Hydrauliksystems des Schwaders fluidseitig angeschlossen ist. Sämtliche Baugruppen des Hydrauliksteuerblocks sind intern fluidverbunden. Lediglich die sonstigen, nicht zum Hydrauliksteuerblock gehörenden Baugruppen des Hydrauliksystems des Schwaders müssen mit dem Hydrauliksteuerblock fluidseitig verbunden werden. Hierdurch kann ein Schwader mit einem besonders einfachen Aufbau bereitgestellt werden.

Nach einer Weiterbildung der Erfindung weist der Hydrauliksteuerblock einen weiteren Hydraulikanschluss für den Anschluss von schaltbaren Ventileinheiten auf.

Die schaltbaren Ventileinheiten stellen abhängig von ihrer Schaltstellung eine Funktion eines Rückschlagventils oder eine Funktion eines Bypasses bereit, wobei die schaltbaren Ventileinheit mit dem jeweiligen Auslegerarm derart wirkverbunden sind, dass dann, wenn der jeweilige Auslegerarm sich in einem ersten Schwenkbereich befindet, die jeweilige schaltbare Ventileinheit eine erste Schaltstellung einnimmt, in welcher die Funktion des Rückschlagventils aktiv und die Funktion des Bypasses inaktiv ist, und dass dann, wenn der jeweilige Auslegerarm sich in einem zweiten Schwenkbereich befindet, die jeweilige schaltbare Ventileinheit eine zweite Schaltstellung einnimmt, in welcher die Funktion des Rückschlagventils inaktiv und die Funktion des Bypasses aktiv ist. Mit solchen schaltbaren Ventileinheiten ist es möglich, einen Auslegerarm auch dann sicher und zuverlässig, ausgehend von der Transportstellung in Richtung auf die Vorgewendestellung oder gar in Richtung auf die Arbeitsstellung zu verlagern, wenn der Auslegerarm sich noch relativ nahe bei der Transportstellung befindet und infolge dessen ein effektiver Hebelarm des Auslegerarms relativ klein ist. Bei einem relativ kleinen effektiven Hebelarm kann nämlich das Gewicht des Auslegerarms sowie des am Auslegerarm aufgenommenen Schwadkreisels nicht ausreichend sein, um alleine aufgrund der Gewichtskraft und des wirksamen Hebelarms den Auslegerarm zuverlässig gegen einen Entlastungsdruck zu verlagern.

Vorzugsweise weist der Hydrauliksteuerblock für die Betätigungszylinder aller Auslegerarme jeweils zwei individuelle zweite Hydraulikanschlüsse auf, nämlich jeweils einen Hydraulikanschluss für einen Vorgewendeaushub und einen Hydraulikanschluss für einen Transportaushub des jeweiligen Auslegerarms. Der Hydrauliksteuerblock weist dann ferner ein Umschaltventil auf, über welches abhängig von der Schaltstellung desselben entweder die Hydraulikanschlüsse für den Vorgewendeaushub oder für den Transportaushub in hydraulischer Wirkverbindung mit dem ersten Hydraulikanschluss stehen. Die Aushubventile sind dann vorzugsweise zwischen das Umschaltventil und die Hydraulikanschlüsse für den Vorgewendeaushub geschaltet. Vorzugsweise ist dann zwischen das Umschaltventil und die Hydraulikanschlüsse für den Transportaushub ein Stromteiler und für die Betätigungszylinder aller Auslegerarme jeweils ein Rückschlagventil geschaltet, um einen Ölaustausch zwischen den Aushubzylindern in der Vorgewendestellung zu verhindern.

Diese Weiterbildung des Hydrauliksteuerblocks des Schwaders ist dann bevorzugt, wenn der Schwader eine erweiterte Funktionalität aufweisen soll. Insbesondere kann über die zweiten Hydraulikanschlüsse für den Transporthub sowie die zweiten Hydraulikanschlüsse für den Vorgewendeaushub jeder Auslegerarm individuell verlagert werden. Das Umschaltventil erlaubt für alle Auslegerarme gemeinsam entweder die Verwendung der Hydraulikanschlüsse für den Transportaushub oder die Verwendung der Hydraulikanschlüsse für den Vorgewendeaushub.

Nach einer Weiterbildung der Erfindung weist der Hydrauliksteuerblock auch ein für die Betätigungszylinder aller Auslegerarme gemeinsames, parallel zum Druckbegrenzungsventil geschaltetes Sperrventil, auf.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung eines Schwaders;
- Fig. 2: ein Blockschaltbild eines Hydrauliksystems des Schwaders mit einem Hydrauliksteuerblock;
- Fig. 3: ein Blockschaltbild eines Hydrauliksystems des Schwaders mit einem alternativen Hydrauliksteuerblock.

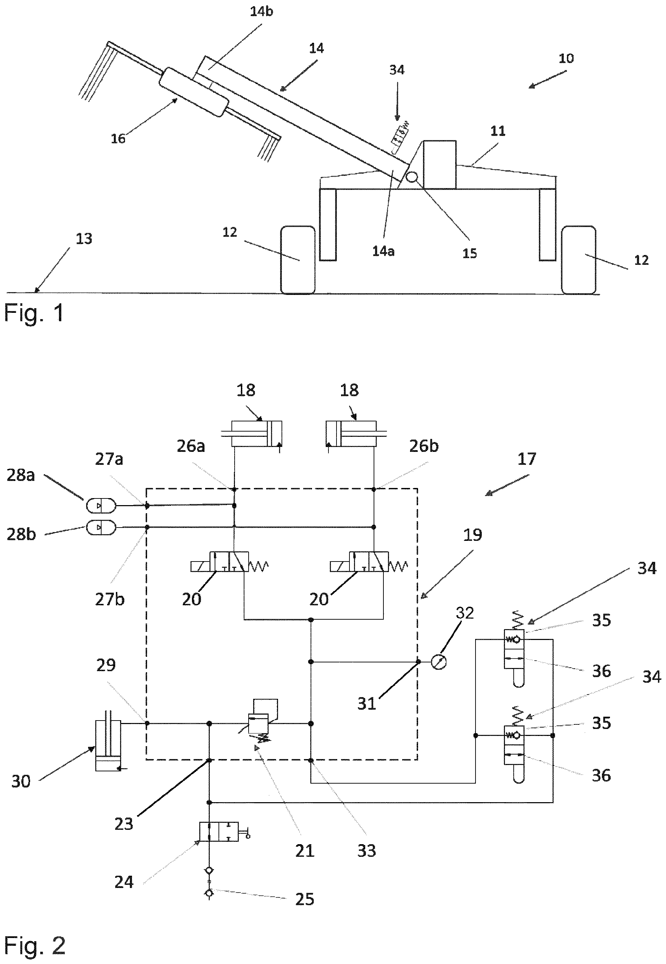

Die Erfindung betrifft einen Schwader. Fig. 1 zeigt stark schematisiert einen Schwader 10. Der Schwader 10 verfügt über ein Grundgestell 11. Das Grundgestell 11 kann sich über Räder 12 auf einem zu bearbeitenden Untergrund 13 abstützen. Ferner verfügt der Schwader 10 über Auslegerarme 14. In Fig. 1 ist ein Auslegerarm 14 gezeigt, wobei in Richtung der Zeichenebene gesehen vor dem und/oder hinter dem gezeigten Auslegerarm 14 ein weiterer Auslegerarm angeordnet sein kann. Es ist auch möglich, dass an beiden Seiten des Grundgestells 11 Auslegerarme 14 angeordnet sind.

Jeder Auslegerarm 14 greift über ein erstes Ende 14a am Grundgestell 11 an und ist an diesem Ende 14a über ein Gelenk 15 relativ zum Grundgestell 11 verschwenkbar bzw. klappbar. An einem zweiten, gegenüberliegenden Ende 14b des jeweiligen Auslegerarms 14 greift ein Schwadkreisel 16 an.

Jeder Auslegerarm 14 ist zwischen einer Arbeitsstellung, einer Vorgewendestellung und einer Transportstellung verlagerbar, wozu dem jeweiligen Auslegerarm ein vorzugsweise einfach wirkender hydraulischer Betätigungszylinder 18 zugeordnet ist. Fig. 1 zeigt den dort sichtbaren Auslegerarm 14 in einer Vorgewendestellung. In einer Arbeitsstellung ist der Auslegerarm 14 zusammen mit dem Schwadkreisel 16 weiter abgesenkt. In der Transportstellung hingegen ist der Auslegerarm 14 und damit der Schwadkreisel 16 weiter nach oben geschwenkt.

Der Schwader verfügt über ein Hydrauliksystem 17. Fig. 2 zeigt ein Hydrauliksystem 17 für einen Schwader 10 mit zwei Auslegerarmen 14, wobei jedem Auslegerarm 14 jeweils ein hydraulischer Betätigungszylinder 18 zugeordnet ist, über weichen der jeweilige Auslegerarm zwischen der Arbeitsstellung, der Vorgewendestellung und der Transportstellung verlagerbar ist.

Das Hydrauliksystem 17 des erfindungsgemäßen Schwaders 10 verfügt über einen für die Betätigungszylinder 18 aller Auslegerarme 14 gemeinsamen Hydrauliksteuerblock 19, der in Fig. 2 in gestrichelter Linienführung gezeigt ist.

Der Hydrauliksteuerblock 19 weist für den Betätigungszylinder 18 jedes Auslegerarms 14 ein individuelles, schaltbares Aushubventil 20 auf. Das Aushubventil 20 ist vorzugsweise als magnetisch betätigtes Ventil ausgeführt. Dies gilt auch für andere bereits erwähnte oder noch nachfolgend erwähnte Schaltventile.

Ferner weist der Hydrauliksteuerblock 19 ein für die Betätigungszylinder 18 aller Auslegerarme 14 gemeinsames Druckbegrenzungsventil 21 auf.

Der Hydraulikblock 19 verfügt weiterhin über eine Vielzahl von Hydraulikanschlüssen.

Ein erster Hydraulikanschluss 23 des Hydraulikblocks 19 ist dazu ausgebildet, den Hydraulikblock 19 an ein Hydrauliksystem eines Zugfahrzeugs anzuschließen. Dies erfolgt gemäß Fig. 2 unter Zwischenschaltung eines Sicherheitsventils 24, welches zwischen den ersten Hydraulikanschluss 23 und einen Hydraulikanschluss 25 des Hydrauliksystems des Zugfahrzeugs gekoppelt ist.

Der Hydrauliksteuerblock 19 verfügt über mehrere zweite Hydraulikanschlüsse 26a und 26b, die für den Anschluss der Betätigungszylinder 18 der Auslegerarme 14 an dem Hydraulikblock 19 ausgebildet sind.

Ferner verfügt der Hydrauliksteuerblock 19 über mindestens einen dritten Hydraulikanschluss 27a, 27b, der für den Anschluss mindestens eines Druckspeichers 28a, 28b ausgebildet ist. Die Druckspeicher 28a, 28b dienen einerseits der Speicherung des Entlastungsdrucks und andererseits ermöglichen sie eine Bodenanpassung der Schwadkreisel 16 in der Arbeitsstellung der Auslegerarme 14. Wenn sich die Schwadkreisel 16 der Bodenkontur anpassen, müssen sich die Auslegerarme 14 entsprechend heben oder senken. Dabei muss Hydrauliköl entweder in einen Betätigungszylinder 18 nachfließen oder es muss aus dem Betätigungszylinder 18 herausfließen bzw. verdrängt werden. Das nachfließende Hydrauliköl wird von den Druckspeichern 28a, 28b unter dem gespeicherten Entlastungsdruck zur Verfügung gestellt und im anderen Fall können die Druckspeicher 28a, 28b das aus den Betätigungszylindern 18 verdrängte Hydrauliköl aufnehmen.

Ferner verfügt der Hydrauliksteuerblock 19 über einen vierten Hydraulikanschluss 29. Dieser ist für den Anschluss eines Betätigungszylinders 30 einer nicht gezeigten Tragstruktur eines nicht gezeigten Schwadtuchs ausgebildet.

Die beiden individuell schaltbaren Aushubventile 20 für die Betätigungszylinder 18 der Auslegerarme 14 sind bezogen auf die zweiten Hydraulikanschlüsse 26a, 26b parallel zueinander geschaltet.

Der zweite Hydraulikanschluss 26a ist unmittelbar mit dem dritten Hydraulikanschluss 27a und der zweite Hydraulikanschluss 26b unmittelbar mit dem dritten Hydraulikanschluss 27b fluidseitig verbunden. Der erste Hydraulikanschluss 23 ist in Fig. 2 unmittelbar mit dem vierten Hydraulikanschluss 29 fluidverbunden.

Im gezeigten Ausführungsbeispiel verfügt der Hydraulikblock 19 weiterhin über einen fünften Hydraulikanschluss 31, der für den Anschluss eines Manometers 32 ausgebildet ist.

Darüber hinaus verfügt im Ausführungsbeispiel der Fig. 2 der Hydrauliksteuerblock 19 über einen sechsten Hydraulikanschluss 33, der für den Anschluss von schaltbaren Ventileinheiten 34 ausgebildet ist. Die schaltbaren Ventileinheiten 34 sind zwischen den ersten Anschluss 23 und den sechsten Anschluss 33 geschaltet, wobei die schaltbaren Ventileinheiten 34 parallel zueinander geschaltet sind. Mit jedem Auslegerarm 14 wirkt ein schaltbare Ventileinheit 34 zusammen.

Jeder der Ventileinheiten 34 stellt abhängig von ihrer Schaltstellung entweder die Funktion eines Rückschlagventils 35 oder die Funktion eines Bypasses 36 zum Druckbegrenzungsventil 21 bereit. In der in Fig. 2 gezeigten Schaltstellung der Ventileinheiten 34 ist die Funktion des Bypasses 36 inaktiv und die Funktion des Rückschlagventils 35 aktiv. In einer zweiten Schaltstellung der Ventileinheiten 34 ist die Funktion des Bypasses 36 aktiv und die Funktion des Rückschlagventils 35 inaktiv.

Bei aktiver Funktion des Rückschlagventils 35 lässt die jeweilige Ventileinheit 34 eine Hydraulikölströmung parallel zum Druckbegrenzungsventil 21 ausgehend vom Hydrauliksystem des Zugfahrzeugs in Richtung auf die Betätigungszylindern 18 zu, unterbindet jedoch in entgegengesetzter Richtung eine Hydraulikölströmung parallel zum Druckbegrenzungsventil 21 ausgehend von den Betätigungszylindern 18 in Richtung auf Hydrauliksystem des Zugfahrzeugs.

Bei aktiver Funktion des Bypasses 36 ist in beiden Strömungsrichtungen eine Hydraulikölströmung parallel zum Druckbegrenzungsventil 21 möglich. Nimmt die jeweilige Ventileinheit 34 also die zweite Schaltstellung ein, in welcher die Funktion des Bypasses 36 aktiv ist, lässt die jeweilige Ventileinheit 36 die Strömung des Hydrauliköls ausgehend von den Betätigungszylindern 18 in Richtung auf das Sicherheitsventil 24 parallel zum Druckbegrenzungsventil 21 zu.

Die jeweilige schaltbare Ventileinheit 34 ist derart mit einem jeweiligen Auslegerarm 14 wirkverbunden, dass dann, wenn sich der jeweilige Auslegerarm 14 in einem ersten Schwenkbereich befindet, die jeweilige schaltbare Ventileinheit 34 die erste Schaltstellung einnimmt, in welcher die Funktion des Rückschlagventils 35 aktiv und die Funktion des Bypasses 36 inaktiv ist, wohingegen dann, wenn der jeweilige Auslegerarm 14 sich in einem zweiten Schwenkbereich befindet, die jeweiligen schaltbare Ventileinheit 34 eine zweite Schaltstellung einnimmt, in welcher die Funktion des Rückschlagventils 35 inaktiv und die Funktion des Bypasses 36 aktiv ist.

Der erste Schwenkbereich des Auslegerarms 14 reicht vorzugsweise von der Arbeitsstellung bis oberhalb der Vorgewendestellung.

Dann, wenn der jeweilige Auslegerarm 14 sich in einem ersten Schwenkbereich befindet, ist der effektive Hebelarm desselben groß genug, um infolge des Gewichts des jeweiligen Auslegerarms 14 sowie des Gewichts des jeweiligen Schwadkreisels 16 das Hydrauliköl aus den Betätigungszylindern 18 ausschließlich über das Druckbegrenzungsventil 21 abzuführen.

Ist hingegen der jeweilige Auslegerarm 14 relativ weit in Richtung auf die Transportstellung verlagert und befindet sich damit im zweiten Schwenkbereich, so ist der effektive Hebelarm des Auslegerarms 14 zu gering, um infolge des Gewichts desselben sowie des Schwadkreisels 16 Hydrauliköl aus den Betätigungszylindern 18 ausschließlich über das Druckbegrenzungsventil 21 abzuführen. In diesem Fall nimmt jedoch dann die jeweilige Ventileinheit 34 die zweite Schaltstellung ein, in welcher die Funktion des Bypasses 36 zum Druckbegrenzungsventils 21 aktiv ist, sodass dann das Hydrauliköl unter Umgehung des Druckbegrenzungsventils 21 aus den Betätigungszylindern 18 abströmen kann.

Der zweite Schwenkbereich schließt vorzugsweise oberhalb der Vorgewendestellung direkt an den ersten Schwenkbereich an und verläuft bis zur Transportstellung.

Die jeweilige Ventileinheit 34 ist abhängig von der Stellung des jeweiligen Auslegerarms 14 schaltbar. Es kann stets ein sicheres Überführen des jeweiligen Auslegerarms 14 ausgehend von seiner Transportstellung in Richtung auf die Vorgewendestellung sowie in Richtung auf die Arbeitsstellung desselben gewährleistet werden.

Soll mindestens einer der Auslegerarme 14 über seinen jeweiligen Betätigungszylinder 18 zum Beispiel ausgehend von der Arbeitsstellung in Richtung auf die Vorgewendestellung oder in Richtung auf die Transportstellung verlagert werden, so wird Hydrauliköl bei in Durchflussstellung befindlichem Sicherheitsventil 24 ausgehend vom Hydrauliksystem des Zugfahrzeugs über den Hydrauliksteuerblock 19 dem jeweiligen Betätigungszylinder 18 des jeweiligen Auslegerarms 14 zugeführt.

Dieses Hydrauliköl strömt über den ersten Hydraulikanschluss 23 und über den sechsten Hydraulikanschluss 33 in den Hydraulikblock 19 ein und strömt über das jeweilige Aushubventil 20 in Richtung auf den jeweiligen Betätigungszylinder 18. Hierbei wird auch der Betätigungszylinder 30 der Tragstruktur des Schwadtuchs mit Hydrauliköl versorgt, um auch das Schwadtuch zu verschwenken bzw. zu klappen.

Ist der Auslegerarm 14 bereits in die zweite Stellung verschwenkt, so betätigt der jeweilige Auslegerarm 14 die mit demselben zusammenwirkende, jeweilige schaltbare Ventileinheit 34 und überführt dieselbe in die zweite Schaltstellung, in welcher das Bypassventil 36 aktiv ist. Dies ist für die nachfolgende Zurückverlagerung des jeweiligen Auslegerarms 14 ausgehend von der Transportstellung in Richtung auf die Vorgewendestellung oder Arbeitsstellung von Vorteil.

Soll der jeweilige Auslegerarm 14 in entgegengesetzter Richtung verlagert werden, also ausgehend von seiner Transportstellung in Richtung auf die Vorgewendestellung oder Arbeitsstellung, so fließt das Hydrauliköl in umgekehrter Strömungsrichtung aus den Betätigungszylindern 18 über den Hydraulikblock 19 in Richtung auf das Sicherheitsventil 24 ab, und zwar über das Druckbegrenzungsventil 21, sofern der Druck des abfließenden Hydrauliköls größer ist als der am Druckbegrenzungsventil 21 eingestellte Druck, sowie abhängig von der Schaltstellung der jeweiligen Ventileinheit 34 gegebenenfalls auch über die jeweilige Ventileinheit 34.

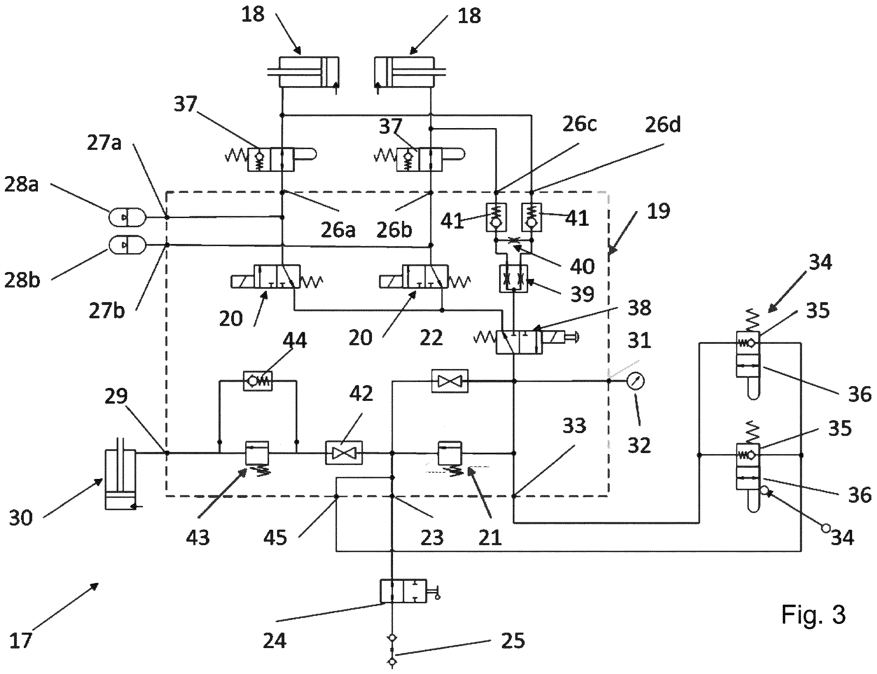

Fig. 3 zeigt eine Weiterbildung des Hydrauliksystems 17 der Fig. 2 bzw. eine Weiterbildung des Hydrauliksteuerblocks 19, wobei der Hydrauliksteuerblock 19 der Fig. 3 sämtliche Baugruppen des Hydrauliksteuerblocks 19 der Fig. 2 umfasst. Für identische Baugruppen werden dabei in Fig. 3 gleiche Bezugsziffern verwendet wie in Fig. 2. Zur Vermeidung unnötiger Wiederholungen wird für diese Baugruppen auf die obigen Ausführungen verwiesen.

Der Hydrauliksteuerblock 19 der Fig. 3 unterscheidet sich vom Hydrauliksteuerblock 19 der Fig. 2 dadurch, dass der Hydrauliksteuerblock 19 der Fig. 3 für die Betätigungszylinder 18 der Auslegerarme 14 jeweils zwei individuelle zweite Hydraulikanschlüsse aufweist. So weist der Hydraulikblock 19 der Fig. 3 zusätzlich zu den beiden zweiten Hydraulikanschlüssen 26a und 26b weitere zweite Hydraulikanschlüsse 26c und 26d auf. Die beiden Hydraulikanschlüsse 26b und 26c wirken dabei mit dem in Fig. 3 rechten Betätigungszylinder 18 und die beiden zweiten Hydraulikanschlüsse 26a und 26d mit dem in Fig. 3 gezeigten linken Betätigungszylinder 18 zusammen. Die beiden Hydraulikanschlüsse 26a und 26b dienen dabei als Hydraulikanschlüsse für einen Vorgewendeaushub der Auslegerarme 14. Zwischen diese beiden Hydraulikanschlüsse 26a und 26b sowie den jeweiligen Betätigungszylinder 18 sind Schaltventile 37 geschaltet, die in der Fig. 3 gezeigten Schaltstellung die Funktion eines Durchflussventils in der anderen Schaltstellung die Funktion eines Rückschlagventils einnehmen. Soll ein Auslegerarm 14 ausgehend von seiner Arbeitsstellung in die Vorgewendestellung überführt werden, so wird dem jeweiligen Betätigungszylinder 18 über das jeweilige Aushubventil 20, den jeweiligen zweiten Hydraulikanschluss 26a, 26b für den Vorgewendeaushub und das jeweilige Schaltventil 37 Hydrauliköl zugeführt, wobei dann, wenn der jeweilige Auslegerarm 14 seine Vorgewendestellung erreicht hat, derselbe das Schaltventil 37 betätigt und in eine Schaltstellung überführt, in welcher das jeweilige Schaltventil 37 die Funktion eines Rückschlagventils einnimmt, sodass dann kein weiteres Hydrauliköl dem jeweiligen Betätigungszylinder 18 ausgehend vom jeweiligen zweiten Hydraulikanschluss 26a, 26b zugeführt werden kann.

Die beiden weiteren zweiten Hydraulikanschlüsse 26c und 26d sind Hydraulikanschlüsse für einen Transportaushub des jeweiligen Auslegerarms 14, um denselben also über die Vorgewendestellung hinaus in Richtung auf seine Transportstellung zu verlagern. Um Hydrauliköl entweder über die beiden zweiten Hydraulikanschlüsse 26a, 26b für den Vorgewendeaushub oder die beiden zweiten Hydraulikanschlüsse 26c, 26d für den Transportaushub in Richtung auf den Betätigungszylinder 18 des jeweiligen Auslegerarms 14 zu führen, umfasst die Hydrauliksteuereinheit 19 der Fig. 3 über ein Umschaltventil 38.

Abhängig von der Schaltstellung dieses Umschaltventils 38 wird das Hydrauliköl, welches vom Hydrauliksystem des Zugfahrzeugs bereitgestellt wird, entweder in Richtung auf die Hydraulikanschlüsse 26a, 26b für den Vorgewendeaushub oder den Hydraulikanschlüssen 26c, 26d für den Transportaushub geführt, wobei das Druckbegrenzungsventil 21 zwischen dieses Umschaltventil 38 und den ersten Hydraulikanschluss 23 des Hydrauliksteuerblocks 19 geschaltet ist. Die Parallelschaltung aus dem Druckbegrenzungsventil 21 und einem Sperrventil 22 ist demnach zwischen den ersten Hydraulikanschluss 23 und das Umschaltventil 38 geschaltet.

Bei dem Sperrventil 22 handelt es sich um ein manuell betätigbares Sperrventil, welches dazu dient, bei Reparaturarbeiten oder Wartungsarbeiten Druck im Hydrauliksystem abzubauen. Das Druckbegrenzungsventil 21 ist hinsichtlich des Maximaldrucks über ein Handrad einstellbar.

Die Aushubventile 20 sind zwischen das Umschaltventil 38 und die zweiten Hydraulikanschlüsse 26a, 26b für den Vorgewendeaushub geschaltet. Zwischen das Umschaltventil 38 und die zweiten Hydraulikanschlüsse 26c, 26d für den Transportaushub der Auslegerarme 14 ist beim Hydrauliksteuerblock 19 der Fig. 3 einerseits ein Stromteiler 39 mit vorzugsweise einer Ausgleichsblende 40 geschaltet, wobei zwischen den Stromteiler 39 und die beiden zweiten Hydraulikanschlüsse 26c, 26d für den Transportaushub weiterhin für jeden Betätigungszylinder 18 jeweils ein Rückschlagventil 41 geschaltet.

Soll also ein Auslegerarm in die Transportstellung verlagert werden, so wird dem Betätigungszylinder 18 des jeweiligen Auslegerarms 14 das Hydrauliköl über die zweiten Hydraulikanschlüsse 26c, 26d für den Transportaushub zugeführt, wobei hierzu dann das Umschaltventil 38 eine entsprechende Schaltstellung einnimmt und beide Auslegerarme 14 gemeinsam in die Transportstellung überführt werden. Während also mit dem Hydrauliksteuerblock 19 der Fig. 3 jeder Auslegerarm 14 individuell in eine Vorgewendestellung überführt werden kann, werden beide Auslegerarme 14 gemeinsam in die Transportstellung überführt.

Ein weiterer Unterschied des Hydrauliksteuerblocks 19 der Fig. 3 gegenüber dem Hydrauliksteuerblock der Fig. 2 besteht darin, dass in Fig. 3 der erste Hydraulikanschluss 23 nicht unmittelbar mit dem vierten Hydraulikanschluss 29 für den Betätigungszylinder 30 des Schadtuchs fluidverbunden ist, sondern vielmehr unter Zwischenschaltung eines weiteren Sperrventils 42 und eines Druckfolgeventils 43, wobei parallel zum Druckfolgeventil 43 ein Rückschlagventil 44 geschaltet ist.

Bei dem Sperrventil 42 handelt es sich wiederum um ein manuell betätigbares Sperrventil. Dieses kann manuell zum Beispiel dann geschlossen werden, wenn ein Schwadtuch in einer ausgehobenen Position verbleiben soll.

Die Parallelschaltung aus dem Druckfolgeventil 43 und dem Rückschlagventil 44 ist zwischen das Sperrventil 42 und den vierten Hydraulikanschluss 29 des Hydrauliksteuerblocks 19 geschaltet. Das Druckfolgeventil 43, an dem ein deutlich höherer Druck als am Druckbegrenzungsventil 21 eingestellt ist, verhindert, dass der Betätigungszylinder 30 in Ausnahmesituationen ungewollt einfährt und damit das Schwadtuch anhebt. Solche Ausnahmesituationen können entstehen, wenn ein oder beide Schwadkreisel 16 in tiefe Senken einfahren, wobei viel Hydrauliköl aus den Betätigungszylindern 18 verdrängt wird, oder wenn der Entlastungsdruck kurzzeitig erhöht wird.

Ein weiterer Unterschied des Hydrauliksteuerblocks 19 der Fig. 3 gegenüber dem Hydrauliksteuerblock der Fig. 2 besteht darin, dass in Fig. 3 die schaltbaren Ventileinheiten 34 nicht zwischen den ersten Hydraulikanschluss 23 und den sechsten Hydraulikanschluss 33 geschaltet sind, sondern zwischen sechsten Hydraulikanschluss 33 und einen siebten Hydraulikanschluss 45. Der siebte Hydraulikanschluss 45 ist innerhalb des Hydrauliksteuerblocks 19 mit dem ersten Hydraulikanschluss 23 unmittelbar fluidverbunden.

Sämtliche Baugruppen, die in Fig. 2 und Fig. 3 innerhalb des den Hydrauliksteuerblock 19 visualisierenden gestrichelten Blocks angeordnet sind, sind Baugruppen des jeweiligen Hydrauliksteuerblocks 19.

Der Hydrauliksteuerblock 19 bildet dabei eine funktionale Einheit aus. Sämtliche Baugruppen desselben sind innerhalb des Hydrauliksteuerblocks 19, wie gezeigt, fluidverbunden. Lediglich über seinen Hydraulikanschlüsse 23, 26, 27, 29, 31, 33 ist der Hydrauliksteuerblock 19 an weitere Baugruppen des Hydrauliksystems 17 des jeweiligen Schwaders 10 fluidseitig angeschlossen.

Es liegt demnach im Sinne der hier vorliegenden Erfindung, möglichst viele Baugruppen eines Hydrauliksteuersystems 17 eines Schwaders 10 zu einem Hydrauliksteuerblock 19 zusammenzufassen und so eine funktionale Einheit auszubilden, die dann mit geringem Verrohrungsaufwand an andere Baugruppen des Hydrauliksystems 17 des Schwaders 10 angeschossen werden kann. Hierdurch kann der Aufbau eines Schwaders, nämlich des Hydrauliksystems 17 desselben vereinfacht werden. Die Anzahl möglicher Leckagestellen wird reduziert.

### Bezugszeichenliste

- 10: Schwader
- 11: Grundgestell
- 12: Rad
- 13: Untergrund
- 14: Auslegerarm
- 14a: Ende
- 14b: Ende
- 15: Gelenk
- 16: Schwadkreisel
- 17: Hydrauliksystem
- 18: Betätigungszylinder
- 19: Hydrauliksteuerblock
- 20: Aushubventil
- 21: Druckbegrenzungsventil
- 22: Sperrventil
- 23: Hydraulikanschluss
- 24: Sicherheitsventil
- 25: Hydraulikanschluss
- 26a: Hydraulikanschluss
- 26b: Hydraulikanschluss
- 26c: Hydraulikanschluss
- 26d: Hydraulikanschluss
- 27a: Hydraulikanschluss
- 27b: Hydraulikanschluss
- 28a: Druckspeicher
- 28b: Druckspeicher
- 29: Hydraulikanschluss
- 30: Betätigungszylinder
- 31: Hydraulikanschluss
- 32: Manometer
- 33: Hydraulikanschluss
- 34: Ventileinheit
- 35: Rückschlagventil
- 36: Bypass
- 37: Schaltventil
- 38: Umschaltventil
- 39: Stromteiler
- 40: Ausgleichsblende
- 41: Rückschlagventil
- 42: Sperrventil
- 43: Druckfolgeventil
- 44: Rückschlagventil
- 45: Hydraulikanschluss

## Patentansprüche

1. Schwader (10),
mit einem Grundgestell (11), das über Räder (12) auf einem zu bearbeitenden Untergrund (13) abstützbar ist und über das der Schwader (10) an ein Zugfahrzeug ankoppelbar ist,
mit mindestens zwei am Grundgestell (11) schwenkbar gelagerten Auslegerarmen (14), wobei jeder Auslegerarm (14) einen Schwadkreisel (16) trägt, und wobei jedem Auslegerarm (14) ein hydraulischer Betätigungszylinder (18) zugeordnet ist, über welchen der jeweilige Auslegerarm (14) zwischen einer Arbeitsstellung, einer Vorgewendestellung und einer Transportstellung verlagerbar ist, wobei
ein Hydrauliksystem (17) des Schwaders einen für die Betätigungszylinder (18) aller Auslegerarme (14) gemeinsamen Hydrauliksteuerblock (19) aufweist,
der Hydrauliksteuerblock (19) ein für die Betätigungszylinder (18) aller Auslegerarme (14) gemeinsames Druckbegrenzungsventil (21) aufweist,
der Hydrauliksteuerblock (19) mehrere Hydraulikanschlüsse aufweist, nämlich einen ersten Hydraulikanschluss (23), der für den Anschluss an ein Hydrauliksystem eines Zugfahrzeugs ausgebildet ist, mehrere zweite Hydraulikanschlüsse (26a, 26b, 26c, 26d), die für den Anschluss der Betätigungszylinder (18) der Auslegerarme (14) ausgebildet sind, und mindestens einen dritten Hydraulikanschluss (27a, 27b), der für den Anschluss mindestens eines Druckspeichers (28a, 28b) ausgebildet ist, **dadurch gekennzeichnet, dass** der Hydrauliksteuerblock (19) für den Betätigungszylinder (18) jedes Auslegerarms (14) ein individuelles, schaltbares Aushubventil (20) und einen vierten Hydraulikanschluss (29) aufweist,
der für den Anschluss eines Betätigungszylinders (30) einer Tragstruktur eines Schwadtuchs ausgebildet ist.

2. Schwader nach Anspruch 1, **dadurch gekennzeichnet, dass** der Hydrauliksteuerblock (19) einen fünften Hydraulikanschluss (31) aufweist, der für den Anschluss eines Manometers (32) ausgebildet ist.

3. Schwader nach Anspruch 1 oder 2, **dadurch gekennzeichnet, dass**
der Hydrauliksteuerblock (19) einen sechsten Hydraulikanschluss (33) aufweist, der für den Anschluss von schaltbaren Ventileinheiten (34) ausgebildet ist,
die schaltbaren Ventileinheiten (34) abhängig von ihrer Schaltstellung eine Funktion eines Rückschlagventils (35) oder eine Funktion eines Bypasses (36) bereitstellen, wobei die schaltbaren Ventileinheit (34) mit dem jeweiligen Auslegerarm (14) derart wirkverbunden sind, dass dann, wenn sich der jeweilige Auslegerarm (14) in einem ersten Schwenkbereich befindet, die jeweilige schaltbare Ventileinheit (34) eine erste Schaltstellung einnimmt, in welcher die Funktion des Rückschlagventils (35) aktiv und die Funktion des Bypasses (36) inaktiv ist, und dass dann, wenn sich der jeweilige Auslegerarm (14) in einem zweiten Schwenkbereich befindet, die jeweilige schaltbare Ventileinheit (34) eine zweite Schaltstellung einnimmt, in welcher die Funktion des Rückschlagventils (35) inaktiv und die Funktion des Bypasses (36) aktiv ist.

4. Schwader nach einem der Ansprüche 1 bis 3, **dadurch gekennzeichnet, dass**
der Hydrauliksteuerblock (19) für die Betätigungszylinder (18) aller Auslegerarme (14) jeweils zwei individuelle zweite Hydraulikanschlüsse aufweist, nämlich jeweils einen zweiten Hydraulikanschluss (26a, 26b) für einen Vorgewendeaushub und jeweils einen zweiten Hydraulikanschluss (26c, 26d) für einen Transportaushub des jeweiligen Auslegerarms,
der Hydrauliksteuerblock (19) ein Umschaltventil (38) aufweist, über welches abhängig von der Schaltstellung desselben entweder die Hydraulikanschlüsse (26a, 26b) für den Vorgewendeaushub oder die Hydraulikanschlüsse (26c, 26d) für den Transportaushub über das Druckbegrenzungsventil (21) in hydraulischer Wirkverbindung mit dem ersten Hydraulikanschluss (23) stehen.

5. Schwader nach Anspruch 4, **dadurch gekennzeichnet, dass** zwischen das Umschaltventil (38) und die Hydraulikanschlüsse (26c, 26d) für den Transportaushub ein Stromteiler (39) und für die Betätigungszylinder (18) der Auslegerarme (14) jeweils ein Rückschlagventil (41) geschaltet ist.

6. Schwader nach Anspruch 4 oder 5, **dadurch gekennzeichnet, dass** die Aushubventile (20) zwischen das Umschaltventil (38) und die Hydraulikanschlüsse (26a, 26b) für den Vorgewendeaushub geschaltet sind.

7. Schwader nach einem der Ansprüche 1 bis 6, **dadurch gekennzeichnet, dass** ein für die Betätigungszylinder (18) aller Auslegerarme (14) gemeinsames, parallel zum Druckbegrenzungsventil (21) geschaltetes Sperrventil (22) vorgesehen ist.

8. Schwader nach einem der Ansprüche 1 bis 7, **dadurch gekennzeichnet, dass** der erste Hydraulikanschluss (23) und der vierte Hydraulikanschluss (29) unmittelbar fluidverbunden sind.

9. Schwader nach einem der Ansprüche 1 bis 7, **dadurch gekennzeichnet, dass** der erste Hydraulikanschluss (23) und der vierte Hydraulikanschluss (29) unter Zwischenschaltung eines Sperrventils (42) fluidverbunden sind.

10. Schwader nach Anspruch 9, **dadurch gekennzeichnet, dass** zwischen den vierten Hydraulikanschluss (29) und das Sperrventil (42) ein Druckfolgeventil (43) mit einem parallel geschalteten Rückschlagventil (44) geschaltet ist.

11. Schwader nach einem der Ansprüche 1 bis 10, **dadurch gekennzeichnet, dass** der Hydrauliksteuerblock (19) als funktionale Einheit ausgebildet ist, wobei seine Baugruppen (20, 21, 22, 40, 41, 42, 43, 44) intern fluidverbunden sind, und wobei derselbe über seine Hydraulikanschlüsse (23, 26a, 26b, 26c, 26d, 27a, 27b, 29, 31, 33) an weitere Baugruppen (18, 24, 28a, 28b, 30, 34) des Hydrauliksystems (17) des Schwaders (10) fluidseitig angeschlossen ist.

## Claims

1. Windrower (10),
having a main frame (11) which can be supported via wheels (12) on an underlying surface (13) to be cultivated and via which the windrower (10) can be coupled to a tractor, having at least two extension arms (14) which are mounted pivotably on the main frame (11), wherein each extension arm (14) bears a windrower rotor (16), and wherein each extension arm (14) is assigned a hydraulic actuating cylinder (18) via which the respective extension arm (14) can be moved between a working position, a headland position and a transport position, wherein
a hydraulic system (17) of the windrower has a hydraulic control block (19) which is common to the actuating cylinders (18) of all of the extension arms (14),
the hydraulic control block (19) has a pressure-limiting valve (21) which is common to the actuating cylinders (18) of all of the extension arms (14),
the hydraulic block (19) has a plurality of hydraulic connections, namely a first hydraulic connection (23), which is designed for connection to a hydraulic system of a tractor, a plurality of second hydraulic connections (26a, 26b, 26c, 26d), which are designed for the connection of the actuating cylinders (18) of the extension arms (14), and at least one third hydraulic connection (27a, 27b), which is designed for the connection of at least one pressure accumulator (28a, 28b), **characterized in that** the hydraulic control block (19) for the actuating cylinder (18) of each extension arm (14) has an individual switchable lifting valve (20) and a fourth hydraulic connection (29), which is designed for the connection of an actuating cylinder (30) of a support structure of a windrow cloth.

2. Windrower according to Claim 1, **characterized in that** the hydraulic control (19) has a fifth hydraulic connection (31), which is designed for the connection of a manometer (32).

3. Windrower according to Claim 1 or 2, **characterized in that** the hydraulic control block (19) has a sixth hydraulic connection (33), which is designed for the connection of switchable valve units (34),
the switchable valve units (34) operate as a nonreturn valve (35) or as a bypass (36), depending on their switching position, wherein the switchable valve units (34) are operatively connected to the respective extension arm (14) in such a manner that, whenever the respective extension arm (14) is in a first pivoting region, the respective switchable valve unit (34) takes up a first switching position, in which operation of the nonreturn valve (35) is active and operation of the bypass (36) is inactive, and in such a manner that, whenever the respective extension arm (14) is in a second pivoting region, the respective switchable valve unit (34) takes up a second switching position, in which operation of the nonreturn valve (35) is inactive and operation of the bypass (36) is active.

4. Windrower according to one of Claims 1 to 3, **characterized in that** the hydraulic control block (19) for the actuating cylinders (18) of all of the extension arms (14) in each case has two individual second hydraulic connections, namely in each case a second hydraulic connection (26a, 26b) for lifting the respective extension arm at a headland, and in each case a second hydraulic connection (26c, 26d) for lifting same for transport,
the hydraulic control block (19) has a switchover valve (38) via which, depending on the switching position thereof, either the hydraulic connections (26a, 26b) for lifting at a headland or the hydraulic connections (26c, 26d) for lifting for transport are operatively connected hydraulically to the first hydraulic connection (23) via the pressure-limiting valve (21).

5. Windrower according to Claim 4, **characterized in that** a flow divider (39) and a respective nonreturn valve (41) for the actuating cylinders (18) of the extension arms (14) are connected between the switchover valve (38) and the hydraulic connections (26c, 26d) for lifting for transport.

6. Windrower according to Claim 4 or 5, **characterized in that** the lifting valves (20) are connected between the switchover valve (38) and the hydraulic connections (26a, 26b) for lifting at a headland.

7. Windrower according to one of Claims 1 to 6, **characterized in that** a shutoff valve (22) which is common to the actuating cylinders (18) of all the extension arms (14) and is connected parallel to the pressure-limiting valve (21) is provided.

8. Windrower according to one of Claims 1 to 7, **characterized in that** the first hydraulic connection (23) and the fourth hydraulic connection (29) are directly fluidically connected.

9. Windrower according to one of Claims 1 to 7, **characterized in that** the first hydraulic connection (23) and the fourth hydraulic connection (29) are fluidically connected, with the interconnection of a shutoff valve (42) .

10. Windrower according to Claim 9, **characterized in that** a pressure sequence valve (43) with a nonreturn valve (44) connected in parallel is connected between the fourth hydraulic connection (29) and the shutoff valve (42) .

11. Windrower according to one of Claims 1 to 10, **characterized in that** the hydraulic control block (19) is designed as a functional unit, wherein its assemblies (20, 21, 22, 40, 41, 42, 43, 44) are internally fluidically connected, and wherein same is connected fluidically via its hydraulic connections (23, 26a, 26b, 26c, 26d, 27a, 27b, 29, 31, 33) to further assemblies (18, 24, 28a, 28b, 30, 34) of the hydraulic system (17) of the windrower (10).

## Revendications

1. Andaineuse (10),
avec un châssis de base (11) qui peut s'appuyer par l'intermédiaire de roues (12) sur un sol (13) à travailler et par l'intermédiaire duquel l'andaineuse (10) peut être accouplée à un véhicule tracteur,
avec au moins deux bras (14) montés de manière pivotante sur le châssis de base (11), chaque bras (14) portant un rotor d'andainage (16), et un vérin d'actionnement hydraulique (18) étant associé à chaque bras (14), par l'intermédiaire duquel le bras (14) respectif peut être déplacé entre une position de travail, une position de tournière et une position de transport,
un système hydraulique (17) de l'andaineuse présentant un bloc de commande hydraulique (19) commun pour les vérins d'actionnement (18) de tous les bras (14),
le bloc de commande hydraulique (19) présentant une soupape de limitation de pression (21) commune pour les vérins d'actionnement (18) de tous les bras (14),
le bloc de commande hydraulique (19) présentant plusieurs raccords hydrauliques, à savoir un premier raccord hydraulique (23) qui est configuré pour le raccordement à un système hydraulique d'un véhicule tracteur, plusieurs deuxièmes raccords hydrauliques (26a, 26b, 26c, 26d) qui sont configurés pour le raccordement des vérins d'actionnement (18) des bras (14), et au moins un troisième raccord hydraulique (27a, 27b) qui est configuré pour le raccordement d'au moins un accumulateur de pression (28a, 28b), **caractérisée en ce que** le bloc de commande hydraulique (19) pour le vérin d'actionnement (18) de chaque bras (14) présente une soupape de relevage individuelle commutable (20) et un quatrième raccord hydraulique (29) qui est configuré pour le raccordement d'un vérin d'actionnement (30) d'une structure porteuse d'une toile d'andain.

2. Andaineuse selon la revendication 1, **caractérisée en ce que** le bloc de commande hydraulique (19) présente un cinquième raccord hydraulique (31) qui est configuré pour le raccordement d'un manomètre (32).

3. Andaineuse selon la revendication 1 ou 2, **caractérisée en ce que**
le bloc de commande hydraulique (19) présente un sixième raccord hydraulique (33) qui est configuré pour le raccordement d'unités de soupape commutables (34),
les unités de soupape commutables (34) assurent, en fonction de leur position de commutation, une fonction d'une soupape antiretour (35) ou une fonction d'une dérivation (36), les unités de soupape commutables (34) étant reliées de manière active au bras (14) respectif de telle sorte que, lorsque le bras (14) respectif se trouve dans une première plage de pivotement, l'unité de soupape commutable (34) respective prend une première position de commutation dans laquelle la fonction du clapet anti-retour (35) est active et la fonction de la dérivation (36) est inactive, et **en ce que**, lorsque le bras (14) respectif se trouve dans une deuxième plage de pivotement, l'unité de soupape commutable (34) respective prend une deuxième position de commutation dans laquelle la fonction du clapet anti-retour (35) est inactive et la fonction de la dérivation (36) est active.

4. Andaineuse selon l'une quelconque des revendications 1 à 3, **caractérisée en ce que**
le bloc de commande hydraulique (19) pour les vérins d'actionnement (18) de tous les bras (14) présente respectivement deux deuxièmes raccords hydrauliques individuels, à savoir respectivement un deuxième raccord hydraulique (26a, 26b) pour un relevage de tournière et respectivement un deuxième raccord hydraulique (26c, 26d) pour un relevage de transport du bras respectif,
le bloc de commande hydraulique (19) présente une soupape de commutation (38) par l'intermédiaire de laquelle, en fonction de la position de commutation de celle-ci, soit les raccords hydrauliques (26a, 26b) pour le relevage de tournière, soit les raccords hydrauliques (26c, 26d) pour le relevage de transport sont en liaison active hydraulique avec le premier raccord hydraulique (23) par l'intermédiaire de la soupape de limitation de pression (21).

5. Andaineuse selon la revendication 4, **caractérisée en ce qu'**entre la soupape de commutation (38) et les raccords hydrauliques (26c, 26d) pour le relevage de transport est monté un diviseur de flux (39) et un clapet anti-retour (41) est monté respectivement pour les vérins d'actionnement (18) des bras (14).

6. Andaineuse selon la revendication 4 ou 5, **caractérisée en ce que** les soupapes de relevage (20) sont montées entre la soupape de commutation (38) et les raccords hydrauliques (26a, 26b) pour le relevage de tournière.

7. Andaineuse selon l'une quelconque des revendications 1 à 6, **caractérisée en ce qu'**une soupape d'arrêt (22) commune pour les vérins d'actionnement (18) de tous les bras (14), montée en parallèle avec la soupape de limitation de pression (21), est prévue.

8. Andaineuse selon l'une quelconque des revendications 1 à 7, **caractérisée en ce que** le premier raccord hydraulique (23) et le quatrième raccord hydraulique (29) sont directement reliés fluidiquement.

9. Andaineuse selon l'une quelconque des revendications 1 à 7, **caractérisée en ce que** le premier raccord hydraulique (23) et le quatrième raccord hydraulique (29) sont reliés fluidiquement avec interposition d'une soupape d'arrêt (42).

10. Andaineuse selon la revendication 9, **caractérisée en ce qu'**entre le quatrième raccord hydraulique (29) et la soupape d'arrêt (42) est montée une soupape de séquence de pression (43) avec un clapet anti-retour (44) monté en parallèle.

11. Andaineuse selon l'une quelconque des revendications 1 à 10, **caractérisée en ce que** le bloc de commande hydraulique (19) est configuré sous forme d'unité fonctionnelle, ses modules (20, 21, 22, 40, 41, 42, 43, 44) étant reliés fluidiquement en interne, et celle-ci étant raccordée côté fluide par l'intermédiaire de ses raccords hydrauliques (23, 26a, 26b, 26c, 26d, 27a, 27b, 29, 31, 33) à d'autres modules (18, 24, 28a, 28b, 30, 34) du système hydraulique (17) de l'andaineuse (10) .
